# EUROPÄISCHE PATENTSCHRIFT

(11) **EP 1 127 269 B1**
(45) Veröffentlichungstag und Bekanntmachung des Hinweises auf die Patenterteilung: **15.04.2009**
(21) Anmeldenummer: 00965782.6
(22) Anmeldetag: 23.08.2000
(51) Int. Cl.: G01N 27/419

(54) **SENSORELEMENT ZUR BESTIMMUNG DER SAUERSTOFFKONZENTRATION IN GASGEMISCHEN UND VERFAHREN ZUR HERSTELLUNG DESSELBEN**
SENSOR ELEMENT FOR DETERMINING THE OXYGEN CONCENTRATION IN GAS MIXTURES AND METHOD FOR PRODUCING SAME
ELEMENT DE DETECTION POUR LA DETERMINATION DE LA CONCENTRATION EN OXYGENE DE MELANGES GAZEUX, ET PROCEDE DE PRODUCTION DE CET ELEMENT DE DETECTION

(30) Priorität: 28.08.1999 DE 19941051
(43) Veröffentlichungstag der Anmeldung: 29.08.2001
(73) Patentinhaber: ROBERT BOSCH GMBH, 70442 Stuttgart (DE)
(72) Erfinder: SCHEER, Heiner, 89180 Berghuelen (DE); JAUERNIG, Udo, Yokohama 224 (JP); RENZ, Hanz-Joerg, 70771 Leinfelden (DE); DIEHL, Lothar, 70499 Stuttgart (DE); LINDAUER, Dieter, 75417 Muehlacker (DE); KARLE, Juergen, 71277 Rutesheim (DE)
(86) Internationale Anmeldenummer: PCT/DE2000/002879
(87) Internationale Veröffentlichungsnummer: WO 2001/016588

(56) Entgegenhaltungen:
- EP-A- 0 678 740
- DE-A- 3 721 788
- DE-A- 19 539 357
- DE-A- 19 647 144

## Beschreibung

Die Erfindung betrifft ein Sensorelement zur Bestimmung der Sauerstoffkonzentration in Gasgemischen und ein Verfahren zu dessen Herstellung nach dem Oberbegriff der unabhängigen Ansprüche.

### Stand der Technik

Eine heute üblicherweise zur Regelung des Luft-/Kraftstoffverhältnisses von Verbrennunggemischen für Kraftfahrzeugmotoren eingesetzte Sauerstoffsonde, auch als Breitband-Lambdasonde bezeichnet, basiert auf dem Zusammenspiel einer elektrochemischen Pumpzelle und einer Konzentrationszelle. Mit Hilfe der Elektroden der Pumpzelle wird aus einem Meßgasraum des Sensors Sauerstoff in den Abgasstrom gepumpt oder vom Abgasstrom in den Meßgasraum. Dazu ist eine der Pumpelektroden im Meßgasraum und eine auf der dem Abgasstrom ausgesetzten Außenfläche des Sensorelements aufgebracht. Die Elektroden der Konzentrationszelle sind so angeordnet, daß eine sich ebenfalls im Meßgasraum befindet, die andere dagegen in einem üblicherweise mit Luft gefüllten Referenzgaskanal. Diese Anordnung ermöglicht den direkten Vergleich des Sauerstoffpotentials der Meßelektrode im Meßgasraum mit dem Referenz-Sauerstoffpotential der Referenzelektrode in Form einer an der Konzentrationszelle anliegenden, meßbaren Spannung. Meßtechnisch wird die an die Elektroden der Pumpzelle anzulegende Pumpspannung so gewählt, daß an der Konzentrationszelle ein vorbestimmter Spannungswert eingehalten wird. Als ein der Sauerstoffkonzentration proportionales Meßsignal wird der zwischen den Elektroden der Pumpzelle fließende Pumpstrom herangezogen.

Üblicherweise sind Meßgasraum und Referenzgaskanal in unterschiedlichen Ebenen des Sensorelements angeordnet, so daß sich der Referenzgaskanal unterhalb des Meßgasraums befindet. Dies erfordert jedoch mindestens eine zusätzliche Festelektrolytschicht, die den Referenzgaskanal beinhaltet. In der DE OS 196 47 144 A1 wird zumindest als Variante ein Element zur Erfassung des Luft-/Kraftstoffverhältnisses beschrieben, bei dem der Referenzgaskanal in derselben Schichtebene wie der Meßgasraum angeordnet ist. Für eine solche Schicht ist erfahrungsgemäß jedoch bedingt durch Stanzprozesse während der Herstellung eine Mindestschichtdicke vorgegeben. Darüber hinaus ergeben sich durch die veränderte Anordnung der Gasräume Probleme meßtechnischer Art, da bei einer derartigen Anordnung der Innenwiderstand der Konzentrationszelle stark ansteigt und es zu einer einseitigen Belastung der Meß- und Referenzelektrode kommt.

### Vorteile der Erfindung

Das erfindungsgemäße Sensorelement und das erfindungsgemäße Verfahren mit den jeweils kennzeichnenden Merkmalen der Ansprüche 1 und 19 haben den Vorteil, daß die Schicht, die sowohl Meßgasraum als auch Referenzgaskanal beinhaltet, in ihrer Schichtdicke variabel gestaltet werden kann. Es kann vor allem eine Schicht sehr geringer Schichtdicke bzw. eine Schicht mit sehr filigranen Begrenzungen der darin enthaltenen Gasräume, sowie mit nicht mit den Begrenzungen zusammenhängenden Stützelementen erzielt werden.

Durch die in den Unteransprüchen aufgeführten Maßnahmen sind vorteilhafte Weiterbildungen und Verbesserungen des in den unabhängigen Ansprüchen angegebenen Sensorelements möglich. So bewirkt die Anpassung der Trennwand zwischen Meßgasraum und Referenzgaskanal an die Geometrie der im Meßgasraum angeordneten Meßelektrode, daß zwischen Meßgasraum und Referenzgaskanal nur eine kurze räumliche Distanz existiert und damit eine Verringerung des Innenwiderstandes der Konzentrationszelle des Senorelements. Es ist weiterhin besonders vorteilhaft, die im Referenzgaskanal angeordnete Referenzelektrode so auszuführen, daß sie zum einen sich der Geometrie der Trennwand zwischen Meßgasraum und Referenzgaskanal anpaßt, zum anderen, daß sie ihre Oberfläche zur Trennwand hin möglichst groß wird. Dies ermöglicht eine gleichmäßige Beanspruchung der gesamten Elektrodenoberfläche und verringert den elektrischen Widerstand der aus Meßelektrode und Referenzelektrode bestehenden Konzentrationszelle. Dies wird besonders vorteilhaft erreicht, wenn die Meßelektrode kreisförmig ist und die Referenzelektrode um den ebenfalls kreisförmigen Meßgasraum herumgeführt wird. Darüber hinaus zeigt der Innenwiderstand der Konzentrationszelle dieses Sensorelements eine gut auszuwertende Temperaturabhängigkeit, die sich zur Temperatursteuerung des Sensorelements heranziehen läßt.

Vorteilhaft ist gemäß einem weiteren Ausführungsbeispiel die Zusammenfassung der üblicherweise getrennt im Meßgasraum angeordneten Meß- und Pumpelektroden zu einer Elektrode. Dies ermöglicht die Einsparung einer Schichtebene und vereinfacht den Sensoraufbau weiter.

Besonders vorteilhaft ist es, durch eine entsprechende Gestaltung des Schichtaufbaus des Sensorelements den im Sensorelement vorgesehenen Widerstandsheizer so in das Sensorelement einzuarbeiten, daß der Widerstandsheizer von beiden Großflächen des Sensorelements gleich weit entfernt ist. Dies führt zu geringeren mechanischen Spannungen während des Aufheizvorgangs und des Betriebs, vor allem an den heizerseitigen Kanten des Sensorelements.

### Zeichnung

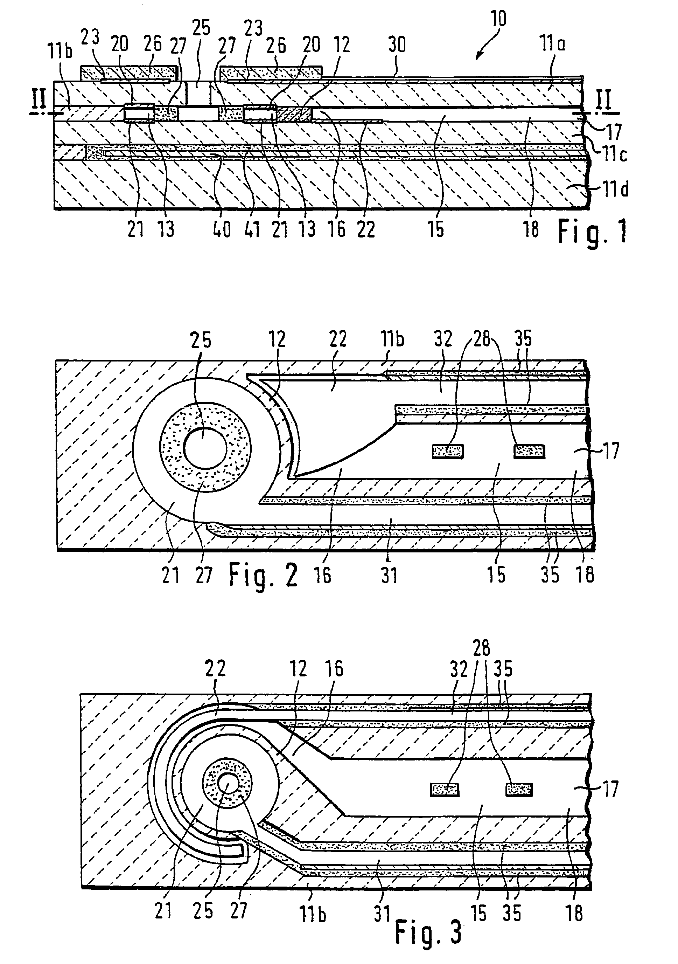

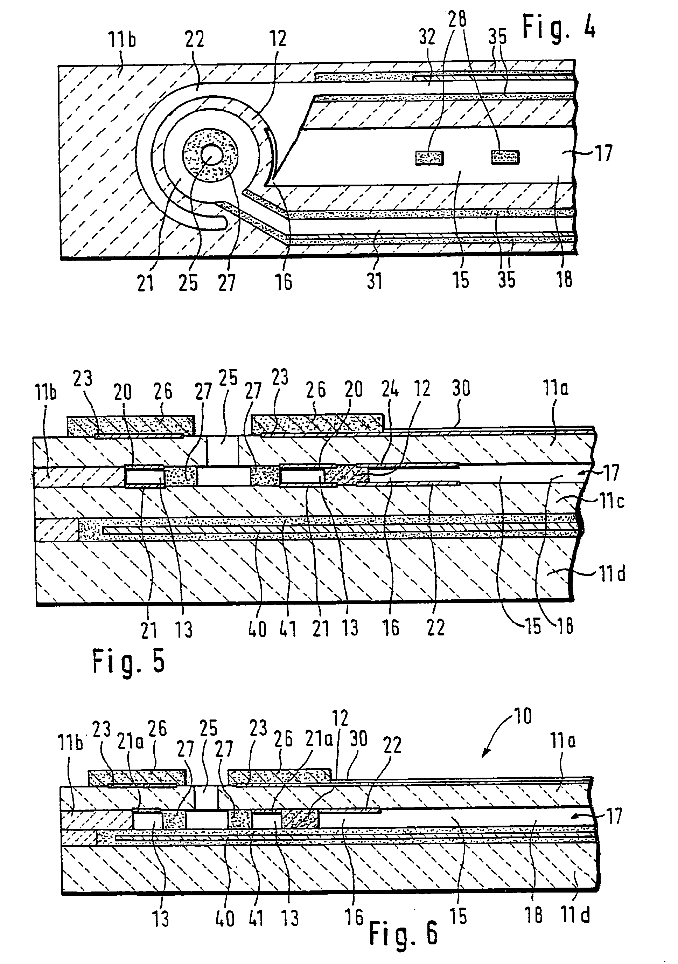

Ein Ausführungsbeispiel der Erfindung ist in der Zeichnung dargestellt und in der nachfolgenden Beschreibung näher erläutert. Es zeigen Figur 1 einen Querschnitt durch die Großfläche des erfindungsgemäßen Sensorelements, Figur 2 einen Längsschnitt durch das Sensorelement gemäß der Linie II-II in Figur 1, Figur 3 und 4 Längsschnitte durch das Sensorelement gemäß einem dritten und vierten Ausführungsbeispiel und Figur 5 und 6 einen Querschnitt durch die Großfläche des Sensorelements gemäß zwei weiteren Ausführungsbeispielen.

### Ausführungsbeispiele

Figur 1 und 2 zeigt einen prinzipiellen Aufbau einer ersten Ausführungsform der vorliegenden Erfindung. Mit 10 ist ein planares Sensorelement eines elektrochemischen Gassensors bezeichnet, das beispielsweise eine Mehrzahl von sauerstoffionenleitenden Festelektrolytschichten 11a, 11b, 11c und 11d aufweist. Die Festelektrolytschichten 11a, 11c und 11d werden dabei als keramische Folien ausgeführt und bilden einen planaren keramischen Körper. Sie bestehen aus einem sauerstoffionenleitenden Festelektrolytmaterial, wie beispielsweise mit Y₂O₃ stabilisiertem oder teilstabilisiertem ZrO₂.

Die Festelektrolytschicht 11b wird dagegen mittels Siebdruck eines pastösen keramischen Materials beispielsweise auf der Festelektrolytschicht 11a erzeugt. Als keramische Komponente des pastösen Materials wird dabei bevorzugt dasselbe Festelektrolytmaterial verwendet, aus dem auch die Festelektrolytschichten 11a, 11c und 11d bestehen.

Die integrierte Form des planaren keramischen Körpers des Sensorelements 10 wird durch Zusammenlaminieren der mit der Festelektrolytschicht 11b und mit Funktionsschichten bedruckten keramischen Folien und anschließendem Sintern der laminierten Struktur in an sich bekannter Weise hergestellt.

Das Sensorelement 10 beinhaltet zwei Gasräume, einen Meßgasraum 13 und einen Referenzgaskanal 15. Diese sind in derselben Schichtebene, beispielsweise 11b, angeordnet und durch eine Trennwand 12 gasdicht voneinander getrennt. Der Referenzgaskanal 15 steht durch einen Gaseinlaß 17, der an einem Ende aus dem planaren Körper des Sensorelements 10 herausführt, in Kontakt mit einer Referenzgasatmosphäre. Er weist ein meßgasraumseitiges Ende 16 und ein gaseinlaßseitiges Ende 18 auf. In der Mitte des Referenzgaskanals 15 sind entlang einer Längsachse des Sensorelements Stützelemente 28 integriert. Diese gestatten eine breite Ausführung des Referenzgaskanals, ohne daß das Sensorelement an Stabilität verliert. Alternativ kann der Referenzgaskanal auch zumindest teilweise mit einem porösen keramischen Material ausgefüllt werden.

Der Meßgasraum 13 ist beispielsweise kreisringförmig ausgeführt und steht über eine Öffnung 25 mit der Gasgemischatmosphäre in Verbindung. Die Öffnung 25 ist in der Festelektrolytschicht 11a senkrecht zur Oberfläche des Sensorelements 10 angebracht.

Auf der dem Meßgas unmittelbar zugewandten Großfläche des Sensorelements 10 ist auf der Festelektrolytschicht 11a eine äußere Pumpelektrode 23 angeordnet, die mit einer porösen Schutzschicht 26 bedeckt sein kann und die kreisringförmig um die Öffnung 25 herum angeordnet sein kann. Auf der dem Meßgasraum zugewandten Seite der Festelektrolytschicht 11a befindet sich die dazugehörige innere Pumpelektrode 20, die angepaßt an die kreisringförmige Geometrie des Meßgasraums 13 ebenfalls kreisringförmig ausgeführt ist. Beide Pumpelektroden bilden zusammen eine Pumpzelle.

Gegenüber der inneren Pumpelektrode 20 befindet sich im Meßgasraum 13 eine Meßelektrode 21. Auch diese ist beispielsweise kreisringförmig ausgeführt. Die dazugehörige Referenzelektrode 22 ist im Referenzgaskanal 15 angeordnet. Sie kann dabei auf der Seite des Referenzgaskanals 15 ausgebildet sein, die in Richtung der der Gasgemischatmosphäre ausgesetzten Großfläche des Sensorelements weist, oder auch an der Seite des Referenzgaskanals 15, die entgegengesetzt zu der der Gasgemischatmosphäre ausgesetzten Großfläche des Sensorelements liegt. Meß- und Referenzelektrode 21, 22 bilden zusammen eine Nernst- bzw. Konzentrationszelle.

Innerhalb des Meßgasraums 13 ist in Diffusionsrichtung des Meßgases der inneren Pumpelektrode 20 und der Meßelektrode 21 eine poröse Diffusionsbarriere 27 vorgelagert. Die poröse Diffusionsbarriere 27 bildet einen Diffusionswiderstand bezüglich des zu den Elektroden 20, 21 diffundierenden Gases aus. Im Falle eines mit einem porösen keramischen Materials gefüllten Referenzgaskanals 15 besteht die Diffusionsbarriere 27 und die Füllung des Referenzgaskanals 15 beispielsweise aus dem gleichen Material, um eine rationelle Herstellung in einem Prozeßschritt zu ermöglichen.

Die äußere Pumpelektrode 23 wird durch eine Leiterbahn 30 kontaktiert, die auf der Oberfläche der Festelektrolytschicht 11a aufgebracht ist. Die Kontaktierung der Meßelektrode 21 und der Referenzelektrode 22 erfolgt über die Leiterbahnen 31, 32, die zwischen den Festelektrolytschichten 11b und 11c geführt und über nicht dargestellte Durchkontaktierungen mit der Großfläche des Sensorelements verbunden sind. Alle Leiterbahnen sind durch die Isolierungen 35, die beispielsweise aus Al₂O₃ bestehen können, gegenüber den Festelektrolytschichten isoliert.

Um zu gewährleisten, daß an den Elektroden eine Einstellung des thermodynamischen Gleichgewichts der Meßgaskomponenten erfolgt, bestehen alle verwendeten Elektroden aus einem katalytisch aktiven Material, wie beispielsweise Platin, wobei das Elektrodenmaterial für alle Elektroden in an sich bekannter Weise als Cermet eingesetzt wird, um mit den keramischen Folien zu versintern.

Des weiteren ist ein Widerstandsheizer 40 zwischen den Festelektrolytschichten 11c und 11d angeordnet und in eine elektrische Isolation 41, beispielsweise aus Al₂O₃, eingebettet. Mittels des Widerstandsheizers 40 wird das Sensorelement 10 auf die entsprechende Betriebstemperatur von beispielsweise 750°C erhitzt.

Die innere und die äußere Pumpelektrode 20, 23 bilden zusammen eine Pumpzelle. Diese bewirkt einen Sauerstofftransport aus dem Meßgasraum 13 hinaus bzw. hinein. Die Meßelektrode 21 und die Referenzelektrode 22 sind als Konzentrationszelle zusammengeschaltet. Diese ermöglicht einen direkten Vergleich des von der Sauerstoffkonzentration im Meßgasraum 13 abhängigen Sauerstoffpotentials der Meßelektrode 21 mit dem konstanten Sauerstoffpotential der Referenzelektrode 22 in Form einer meßbaren elektrischen Spannung. Die Höhe der an die Pumpzelle anzulegenden Pumpspannung wird so gewählt, daß sich an der Konzentrationszelle eine konstante Spannung beispielsweise von 450 mV einstellt. Als ein der Sauerstoffkonzentration im Abgas proportionales Meßsignal wird der zwischen den Elektroden der Pumpzelle fließende Pumpstrom herangezogen.

Problematisch an dieser Gesamtanordnung ist, wie schon eingangs erwähnt, daß durch die parallele Anordnung der Gasräume der Innenwiderstand der Konzentrationszelle stark ansteigt. Dies ist durch die größere Strecke bedingt, die die Ladungsträger innerhalb des Festelektrolyten zurücklegen müssen. Aus diesem Grund werden Meß- und Referenzelektrode 21, 22 räumlich so nahe wie möglich zueinander angeordnet. Dies wird vor allem durch das bei der Herstellung des Sensorelements angewandte Siebdruckverfahren ermöglicht, da so die Trennwand 12 sehr dünn gestaltet werden kann. Die relativ kurze räumliche Distanz beider Elektroden zueinander führt zu einem Innenwiderstand der Konzentrationszelle, der im Vergleich zu herkömmlichen Sensoren nur leicht erhöht ist und zur Temperaturregelung des Sensorelements herangezogen werden kann.

Ein weiteres Problem stellt die stark einseitige Belastung der Meß- und Referenzelektrode im Vergleich zu Sensoren herkömmlichen Typs mit übereinander angeordneten Gasräumen dar. Da die Ladungsträger innerhalb des Festelektrolyten den kürzesten Weg zwischen beiden Elektroden bevorzugen, sind die der jeweils anderen Elektrode zugewandten Kompartimente von Meß- und Referenzelektrode 21, 22 am stärksten belastet. Dieser Tatsache wurde durch die Anpassung der Geometrie des Referenzgaskanals 15 und der Referenzelektrode 22 besonders Rechnung getragen. So wird die Referenzelektrode 22 derart ausgestaltet, daß ihre Oberfläche ihre maximale Ausdehnung am meßgasseitigen Ende des Referenzkanals 15 erreicht, so daß sich der Schwerpunkt der Elektrodenoberfläche möglichst nahe an den Mittelpunkt der Meßelektrode 21 verlagert.

In Figur 3 ist ein zweites Ausführungsbeispiel dargestellt. In diesem wird der Referenzgaskanal 15 um den Meßgasraum 13 herumgeführt, desgleichen auch die Referenzelektrode 22. Beide bilden so einen Kreisringabschnitt. Dies führt zu einer Vergrößerung der meßgasraumseitigen Kompartimente der Referenzelektrode 22 und damit zu einer Entlastung der Elektrode.
Die Referenzelektrode benötigt zwar im Gleichstrombetrieb, der der Steuerung der Pumpspannung dient, einen direkten Kontakt mit der Referenzgasatmosphäre. Die Temperaturregelung des Sensorelements, die auf einer Bestimmung des Innenwiderstandes der Nernstzelle beruht, kann jedoch auch mittels einer Wechselspannung erfolgen. Dabei ist der Kontakt mit der Referenzgasatmosphäre nicht nötig. Es genügt also, wenn nur ein Teil der Oberfläche der Referenzelektrode direkt der Referenzgasatmosphäre ausgesetzt ist. Dies ermöglicht, wie in Figur 4 dargestellt, eine Vereinfachung des in Figur 3 dargestellten Sensoraufbaus. Zwar wird die Referenzelektrode 22 weiterhin in einem Kreisringabschnitt um den Meßgasraum 13 herumgeführt, der Referenzgaskanal 15 jedoch nicht.

Auch die Meßelektrode 21 ist in ihrer räumlichen Ausdehnung nicht an die Größe des Meßgasraums 13 gebunden. Figur 5 zeigt einen Sensoraufbau, der eine Meßelektrode 21 beinhaltet, die in ihrer Ausdehnung über den Meßgasraum 13 hinausgeht und so den Innenwiderstand der Nernstzelle zusätzlich verringert. Zusätzlich sind zwei Referenzelektroden 22, 24 vorgesehen.

Eine weiteres Ausführungsbeispiel ist in Figur 6 dargestellt. Es ist möglich, die innere Pumpelektrode 20 und die Meßelektrode 21 zu einer Meßelektrode 21a zusammenzufassen. Wird diese Meßelektrode 21a wie auch die Referenzelektrode 22 auf der den Gasräumen zugewandten Seite der Festelektrolytschicht 11a angeordnet, so kann auf den Einbau der Festelektrolytschicht 11c verzichtet werden und der Sensoraufbau vereinfacht sich weiter. Es ist dann möglich, durch die Wahl einer entsprechend dicken Festelektrolytschicht 11d das Heizelement 40 so in das Sensorelement zu integrieren, daß es zu beiden Großflächen des Sensorelements den gleichen Abstand hat und somit symmetrisch angeordnet ist. Dies bewirkt eine starke Verringerung der während des Aufheizprozesses auftretenden mechanischen Spannungen, vor allem an den Kanten des Sensorelements.

Das erfindungsgemäße Sensorelement und das Verfahren zu seiner Herstellung sind nicht auf die aufgeführten konkreten Ausgestaltungsmöglichkeiten beschränkt, sondern es sind weitere Ausführungsformen denkbar, die eine oder mehrere mittels eines Druckvorgangs hergestellte Festelektrolytschichten beinhalten.

## Patentansprüche

1. Sensorelement (10) zur Bestimmung der Konzentration von Gaskomponenten in Gasgemischen, insbesondere zur Bestimmung der Sauerstoffkonzentration in Abgasen von Verbrennungsmotoren, mit mindestens einer Pumpzelle, die Sauerstoff in einen Meßgasraum (13) hinein oder heraus pumpt, sowie mit mindestens einer Konzentrationszelle, die mindestens eine im wesentlichen in einem Referenzgaskanal (15) angeordnete Referenzelektrode (22) aufweist, die mit einer Meßelektrode (21) zusammenwirkt, wobei sich der Meßgasraum (13) und der Referenzgaskanal (15) im wesentlichen in derselben Schichtebene befinden und wobei der Referenzgaskanal (15) den Kontakt zu einer Referenzgasatmosphäre ermöglicht, **dadurch gekennzeichnet, daß** zwischen dem Meßgasraum (13) und dem Referenzgaskanal (15) eine Trennwand (12) auf Basis einer mittels Siebdruck auf einer benachbarten Festelektrolytfolie (11a) aufgetragenen keramischen Paste angeordnet ist.

2. Sensorelement nach Anspruch 1, **dadurch gekennzeichnet, daß** die Geometrie der Trennwand (12) weitgehend der referenzgasseitigen Begrenzung der im Meßgasraum (13) angeordneten Meßelektrode (21) angepaßt ist.

3. Sensorelement nach Anspruch 1 und 2, **dadurch gekennzeichnet, daß** die Meßelektrode (21) kreisringförmig und weitgehend im Meßgasraum (13) ausgebildet ist und daß die Trennwand (12) einen Kreisringabschnitt bildet.

4. Sensorelement nach mindestens einem der Ansprüche 1 bis 3, **dadurch gekennzeichnet, daß** die Referenzelektrode (22) eine meßgasraumseitige Begrenzung aufweist, die weitgehend an den Verlauf der referenzgasseitigen Begrenzung der Trennwand (12) angepaßt ist.

5. Sensorelement nach mindestens einem der vorhergehenden Ansprüche, **dadurch gekennzeichnet, daß** sich die Oberfläche der Referenzelektrode (22) vom meßgasraumseitigen Ende (16) des Referenzgaskanals (15) in Richtung des gaseinlaßseitigen Endes (18) des Referenzgaskanals hin in ihrer Ausdehnung derart verjüngt, daß der Schwerpunkt der Elektrodenoberfläche dem Mittelpunkt der Meßelektrode (21) möglichst nahe kommt.

6. Sensorelement nach mindestens einem der vorhergehenden Ansprüche, **dadurch gekennzeichnet, daß** mindestens ein Teil des Referenzgaskanals (15) und/oder der Referenzelektrode (22) zumindest teilweise um den Meßgasraum (13) herumgeführt ist.

7. Sensorelement nach mindestens einem der vorhergehenden Ansprüche, **dadurch gekennzeichnet, daß** im Meßgasraum (13) der Meßelektrode (21) gegenüber eine innere Pumpelektrode (20) der Pumpzelle angeordnet ist.

8. Sensorelement nach mindestens einem der Ansprüche 1 bis 6, **dadurch gekennzeichnet, daß** die im Meßgasraum (13) angeordnete Meßelektrode (21) gleichzeitig eine innere Pumpelektrode (20) der Pumpzelle bildet.

9. Sensorelement nach mindestens einem der vorhergehenden Ansprüche, **dadurch gekennzeichnet, daß** der Meßgasraum (13) mindestens eine Öffnung (25) an der dem Gasgemisch zugewandten Großfläche des Sensorelements im wesentlichen senkrecht zu dessen Oberfläche aufweist, die den Zutritt des Gasgemisches in den Meßgasraum (13) ermöglicht.

10. Sensorelement nach mindestens einem der vorhergehenden Ansprüche, **dadurch gekennzeichnet, daß** der Meßgasraum (13) kreisförmig ausgeführt ist und der Mittelpunkt des Kreises auf der Mittelachse der Öffnung (25) liegt.

11. Sensorelement nach Anspruch 10, **dadurch gekennzeichnet, daß** die Meßelektrode (21) und die innere Pumpelektrode (20) kreisringförmig ausgeführt sind und daß in Diffusionsrichtung des Gasgemischs eine ebenfalls kreisringförmige Diffusionsbarriere (27) vorgelagert ist.

12. Sensorelement nach einem der vorhergehenden Ansprüche, **dadurch gekennzeichnet, daß** die Referenzelektrode (22) an der Seite des Referenzgaskanals (15) angeordnet ist, die in Richtung der der Gasgemischatmosphäre ausgesetzten Großfläche des Sensorelements weist.

13. Sensorelement nach mindestens einem der vorhergehenden Ansprüche, **dadurch gekennzeichnet, daß** zwei sich gegenüberliegende Referenzelektroden (22, 24) im Referenzgaskanal (15) angeordnet sind.

14. Sensorelement nach mindestens einem der vorhergehenden Ansprüche, **dadurch gekennzeichnet, daß** die Meßelektrode (21) teilweise außerhalb des Meßgasraums (13) angeordnet ist.

15. Sensorelement nach mindestens einem der vorhergehenden Ansprüche, **dadurch gekennzeichnet, daß** mindestens eine der Referenzelektroden (22, 24) teilweise außerhalb des Referenzgaskanals (15) angeordnet ist.

16. Sensorelement nach mindestens einem der vorhergehenden Ansprüche, **dadurch gekennzeichnet, daß** der Referenzgaskanal (15) zumindest teilweise mit einem porösen keramischen Material ausgefüllt ist, das vorzugsweise dem der Diffusionsbarriere (27) entspricht.

17. Sensorelement nach mindestens einem der vorhergehenden Ansprüche, **dadurch gekennzeichnet, daß** eine erste, der Gasgemischatmosphäre ausgesetzte Festelektrolytfolie (11a) und eine den Meß- und den Referenzgaskanal enthaltende Festelektrolytschicht (11b) vorgesehen ist und daß die Festelektrolytschicht (11b) direkt auf der Festelektrolytfolie (11a) aufgebracht ist.

18. Sensorelement nach Anspruch 17, **dadurch gekennzeichnet, daß** die Festelektrolytschicht (11b) mit einer zweiten Festelektrolytfolie (11c) verbunden ist und diese mit einer weiteren Festelektrolytfolie (11d), und daß zwischen der zweiten und der weiteren Festelektolytfolie ein Heizelement (40) eingearbeitet ist, und daß die Schichtstärke der weiteren Festelektrolytfolie (11d) so bemessen ist, daß das Heizelement (40) zu beiden Großflächen des Sensorelements (10) im wesentlichen den gleichen Abstand aufweist.

19. Verfahren zur Herstellung eines Sensorelements nach mindestens einem der Ansprüche 1 bis 18, **dadurch gekennzeichnet, daß** auf einer Festelektrolytfolie (11a) eine Festelektrolytschicht (11b) mittels Siebdruck eines pastösen keramischen Materials aufgebracht wird, wobei die Festelektrolytschicht (11b) den Meßgasraum (13) und den Referenzgaskanal (15) beinhaltet.

20. Verfahren nach Anspruch 19, **dadurch gekennzeichnet, daß** mit der Festelektrolytschicht (11b) eine Begrenzung für den Meßgasraum (13) und den Referenzgaskanal (15) erzeugt wird.

21. Verfahren nach Anspruch 19 und 20, **dadurch gekennzeichnet, daß** mit der Festelektrolytschicht (11b) mindestens ein Stützelement (28) im Referenzgaskanal (15) erzeugt wird.

22. Verfahren nach Anspruch 19 bis 21, **dadurch gekennzeichnet, daß** das pastöse keramische Material denselben Festelektrolyten enthält wie die Festelektrolytfolie (11a).

23. Verfahren nach Anspruch 19 bis 22, **dadurch gekennzeichnet, daß** sich an den Druckvorgang eine Temperaturbehandlung anschließt, durch die das pastöse keramische Material in eine keramische Form überführt wird.

## Claims

1. Sensor element (10) for determining the concentration of gas components in gas mixtures, in particular for determining the oxygen concentration in exhaust gases of internal combustion engines, with at least one pumping cell, which pumps oxygen into and out of a measuring gas chamber (13), and also with at least one concentration cell, which has at least one reference electrode (22), which is arranged substantially in a reference gas channel (15) and interacts with a measuring electrode (21), the measuring gas chamber (13) and the reference gas channel (15) being located substantially in the same layer level and the reference gas channel (15) making the contact with a reference gas atmosphere possible, **characterized in that** a partition wall (12) based on a ceramic paste applied by means of screen printing on an adjacent solid electrolyte film (11a) is arranged between the measuring gas chamber (13) and the reference gas channel (15).

2. Sensor element according to Claim 1, **characterized in that** the geometry of the partition wall (12) is largely adapted to the delimitation, on the reference gas side, of the measuring electrode (21) arranged in the measuring gas chamber (13).

3. Sensor element according to Claims 1 and 2,
**characterized in that** the measuring electrode (21) is formed as a circular ring and largely in the measuring gas chamber (13) and **in that** the partition wall (12) forms a portion of the circular ring.

4. Sensor element according to at least one of Claims 1 to 3, **characterized in that** the reference electrode (22) has a delimitation on the measuring gas chamber side that is largely adapted to the profile of the delimitation on the reference gas side of the partition wall (12).

5. Sensor element according to at least one of the preceding claims, **characterized in that** the surface of the reference electrode (22) tapers in its extent from the end (16), on the measuring gas chamber side, of the reference gas channel (15) in the direction of the end (18), on the gas inlet side, of the reference gas channel in such a way that the centre of gravity of the electrode surface comes as close as possible to the centre point of the measuring electrode (21).

6. Sensor element according to at least one of the preceding claims, **characterized in that** at least part of the reference gas channel (15) and/or of the reference electrode (22) is led at least partially around the measuring gas chamber (13).

7. Sensor element according to at least one of the preceding claims, **characterized in that** an inner pumping electrode (20) of the pumping cell is arranged in the measuring gas chamber (13) opposite the measuring electrode (21).

8. Sensor element according to at least one of Claims 1 to 6, **characterized in that** the measuring electrode (21) arranged in the measuring gas chamber (13) at the same time forms an inner pumping electrode (20) of the pumping cell.

9. Sensor element according to at least one of the preceding claims, **characterized in that** the measuring gas chamber (13) has at least one opening (25) on the large area of the sensor element facing the gas mixture, substantially perpendicular to the surface of said element that makes it possible for the gas mixture to enter the measuring gas chamber (13).

10. Sensor element according to at least one of the preceding claims, **characterized in that** the measuring gas chamber (13) is configured in the form of a circle and the centre point of the circle lies on the centre axis of the opening (25).

11. Sensor element according to Claim 10, **characterized in that** the measuring electrode (21) and the inner pumping electrode (20) are configured in the form of a circular ring and **in that** a diffusion barrier (27), likewise in the form of a circular ring, is arranged ahead of it in the direction of diffusion of the gas mixture.

12. Sensor element according to one of the preceding claims, **characterized in that** the reference electrode (22) is arranged on the side of the reference gas channel (15) that is facing in the direction of the large area of the sensor element that is exposed to the gas mixture atmosphere.

13. Sensor element according to at least one of the preceding claims, **characterized in that** two opposing reference electrodes (22, 24) are arranged in the reference gas channel (15).

14. Sensor element according to at least one of the preceding claims, **characterized in that** the measuring electrode (21) is arranged partially outside the measuring gas chamber (13).

15. Sensor element according to at least one of the preceding claims, **characterized in that** at least one of the reference electrodes (22, 24) is arranged partially outside the reference gas channel (15).

16. Sensor element according to at least one of the preceding claims, **characterized in that** the reference gas channel (15) is at least partially filled with a porous ceramic material, which preferably corresponds to that of the diffusion barrier (27).

17. Sensor element according to at least one of the preceding claims, **characterized in that** a first solid electrolyte film (11a), which is exposed to the gas mixture atmosphere, and a solid electrolyte layer (11b), which contains the measuring gas channel and the reference gas channel, are provided and **in that** the solid electrolyte layer (11b) is applied directly on the solid electrolyte film (11a).

18. Sensor element according to Claim 17, **characterized in that** the solid electrolyte layer (11b) is connected to a second solid electrolyte film (11c) and the latter is connected to a further solid electrolyte film (11d), and **in that** a heating element (40) is incorporated between the second solid electrolyte film and the further solid electrolyte film, and **in that** the layer thickness of the further solid electrolyte film (11d) is dimensioned such that the heating element (40) has substantially the same distance from both large areas of the sensor element (10).

19. Method for producing a sensor element according to at least one of Claims 1 to 18, **characterized in that** a solid electrolyte layer (11b) is applied on a solid electrolyte film (11a) by means of screen printing a pasty ceramic material, the solid electrolyte layer (11b) comprising the measuring gas chamber (13) and the reference gas channel (15).

20. Method according to Claim 19, **characterized in that** a delimitation for the measuring gas chamber (13) and the reference gas channel (15) is created by the solid electrolyte layer (11b).

21. Method according to Claims 19 and 20, **characterized in that** at least one supporting element (28) is created in the reference gas channel (15) by the solid electrolyte layer (11b).

22. Method according to Claims 19 to 21, **characterized in that** the pasty ceramic material contains the same solid electrolyte as the solid electrolyte film (11a).

23. Method according to Claims 19 to 22, **characterized in that** the printing operation is followed by a thermal treatment, by which the pasty ceramic material is transformed into a ceramic form.

## Revendications

1. Elément de détection (10) destiné à déterminer la concentration de composants gazeux dans des mélanges de gaz et en particulier à déterminer la concentration en oxygène dans les gaz d'échappement de moteurs à combustion interne, qui présente :
une cellule de pompage qui pompe l'oxygène dans ou hors d'un espace (13) prévu pour le gaz à mesurer,
au moins une cellule de concentration qui présente au moins une électrode de référence (22) qui est disposée essentiellement dans un canal (15) prévu pour le gaz de référence et qui coopère avec une électrode de mesure (21),
l'espace (13) prévu pour le gaz à mesurer et le canal (15) prévu pour le gaz de référence étant situés essentiellement dans le même niveau de couche et le canal (15) prévu pour le gaz de référence permettant le contact avec une atmosphère de gaz de référence,
**caractérisé en ce que**
une paroi de séparation (12) à base d'une pâte céramique appliquée par sérigraphie sur une feuille (11a) d'électrolyte solide voisine est disposée entre l'espace (13) prévu pour le gaz à mesurer et le canal (15) prévu pour le gaz de référence.

2. Elément de détection selon la revendication 1, **caractérisé en ce que** la géométrie de la paroi de séparation (12) est largement adaptée à la frontière côté gaz de référence de l'électrode de mesure (21) disposée dans l'espace (13) prévu pour le gaz à mesurer.

3. Elément de détection selon les revendications 1 et 2, **caractérisé en ce que** l'électrode de mesure (21) a une forme d'anneau circulaire et est formée largement dans l'espace (13) prévu pour le gaz à mesurer, et **en ce que** la paroi de séparation (12) forme une partie d'anneau circulaire.

4. Elément de détection selon au moins l'une des revendications 1 à 3, **caractérisé en ce que** l'électrode de référence (22) présente du côté de l'espace prévu pour le gaz à mesurer une frontière largement adaptée à l'évolution de la frontière côté gaz de référence de la paroi de séparation (12).

5. Elément de détection selon au moins l'une des revendications précédentes, **caractérisé en ce que** l'extension de la surface de l'électrode de référence (22) se rétrécit entre l'extrémité (16) située du côté de l'espace pour le gaz à mesurer du canal (15) prévu pour le gaz de référence en direction de l'extrémité (18) située du côté de l'entrée de gaz du canal prévu pour le gaz de référence, de telle sorte que le centre de gravité de la surface de l'électrode vient se placer aussi près que possible du centre de l'électrode de mesure (21).

6. Elément de détection selon au moins l'une des revendications précédentes, **caractérisé en ce qu'**au moins une partie du canal (15) prévu pour le gaz de référence et/ou de l'électrode de référence (22) passe au moins en partie autour de l'espace (13) prévu pour le gaz à mesurer.

7. Elément de détection selon au moins l'une des revendications précédentes, **caractérisé en ce qu'**une électrode intérieure de pompage (20) de la cellule de pompage est disposée face à l'électrode de mesure (21) dans l'espace (13) prévu pour le gaz à mesurer.

8. Elément de détection selon au moins l'une des revendications 1 à 6, **caractérisé en ce que** l'électrode de mesure (21) disposée dans l'espace (13) prévu pour le gaz à mesurer forme en même temps une électrode intérieure de pompage (20) de la cellule de pompage.

9. Elément de détection selon au moins l'une des revendications précédentes, **caractérisé en ce que** l'espace (13) prévu pour le gaz à mesurer présente au moins une ouverture (25) sur la grande surface de l'élément de détection tournée vers le mélange de gaz, essentiellement perpendiculairement à sa surface, qui permet au mélange de gaz d'accéder dans l'espace (13) prévu pour le gaz à mesurer.

10. Elément de détection selon au moins l'une des revendications précédentes, **caractérisé en ce que** l'espace (13) prévu pour le gaz à mesurer est de forme circulaire et **en ce que** le centre de son cercle est situé sur l'axe central de l'ouverture (25).

11. Elément de détection selon la revendication 10, **caractérisé en ce que** l'électrode de mesure (21) et l'électrode intérieure de pompage (20) sont réalisées en forme d'anneau circulaire et **en ce qu'**une barrière à la diffusion (27) également en forme d'anneau circulaire est placée en amont dans la direction de diffusion du mélange de gaz.

12. Elément de détection selon l'une des revendications précédentes, **caractérisé en ce que** l'électrode de référence (22) est disposée sur le côté du canal (15) prévu pour le gaz de référence qui est tourné en direction de la grande surface de l'élément de détection exposée à l'atmosphère du mélange de gaz.

13. Elément de détection selon au moins l'une des revendications précédentes, **caractérisé en ce que** deux électrodes de référence (22, 24) opposées sont disposées dans le canal (15) prévu pour le gaz de référence.

14. Elément de détection selon au moins l'une des revendications précédentes, **caractérisé en ce qu'**une partie de l'électrode de mesure (21) est disposée à l'extérieur de l'espace (13) prévu pour le gaz de référence.

15. Elément de détection selon au moins l'une des revendications précédentes, **caractérisé en ce qu'**une partie d'au moins l'une des électrodes de référence (22, 24) est disposée à l'extérieur du canal (15) prévu pour le gaz de référence.

16. Elément de détection selon au moins l'une des revendications précédentes, **caractérisé en ce qu'**au moins une partie du canal (15) prévu pour le gaz de référence est remplie d'un matériau céramique poreux qui correspond de préférence à celui de la barrière (27) contre la diffusion.

17. Elément de détection selon au moins l'une des revendications précédentes, **caractérisé en ce qu'**une première feuille (11a) d'électrolyte solide exposée à l'atmosphère du mélange de gaz et une couche (11b) d'électrolyte solide qui contient l'espace prévu pour le gaz à mesurer et le canal à gaz de référence sont prévues et **en ce que** la couche (11b) d'électrolyte solide est appliquée directement sur la feuille (11a) d'électrolyte solide.

18. Elément de détection selon la revendication 17, **caractérisé en ce que** la couche (11b) d'électrolyte solide est reliée à une deuxième feuille (11c) d'électrolyte solide et cette dernière à une autre feuille (11d) d'électrolyte solide, **en ce qu'**entre la deuxième et l'autre feuille d'électrolyte solide est incorporé un élément chauffant (40) et **en ce que** l'épaisseur de couche de l'autre feuille d'électrolyte solide (11d) est dimensionnée de telle sorte que l'élément chauffant (40) présente essentiellement la même distance par rapport aux deux grandes surfaces de l'élément de détection (10).

19. Procédé de fabrication d'un élément de détection selon au moins l'une des revendications 1 à 18, **caractérisé en ce que** sur une feuille (11a) d'électrolyte solide, on applique une couche (11b) d'électrolyte solide en appliquant un matériau céramique pâteux par sérigraphie, la couche (11b) d'électrolyte solide contenant l'espace (13) prévu pour le gaz à mesurer et le canal (15) prévu pour le gaz de référence.

20. Procédé selon la revendication 19, **caractérisé en ce que** la couche (11b) d'électrolyte solide permet d'obtenir une délimitation de l'espace (13) prévu pour le gaz à mesurer et du canal (15) prévu pour le gaz de référence.

21. Procédé selon les revendications 19 et 20, **caractérisé en ce qu'**avec la couche (11b) d'électrolyte solide, on forme au moins un élément de soutien (28) dans le canal (15) pour le gaz de référence.

22. Procédé selon les revendications 19 à 21, **caractérisé en ce que** le matériau céramique pâteux contient le même électrolyte solide que la feuille (11a) d'électrolyte solide.

23. Procédé selon les revendications 19 à 22, **caractérisé en ce qu'**après l'opération de compression, on réalise un traitement thermique par lequel le matériau céramique pâteux est converti en forme céramique.
